# EUROPEAN PATENT APPLICATION

(11) **EP 3 428 785 A1**
(43) Date of publication of application: **16.01.2019**
(21) Application number: 17904355.9
(22) Date of filing: 30.09.2017
(51) Int. Cl.: G06F 3/0481

(54) **DISPLAY METHOD FOR NETWORK INDICATION CONTROL, ELECTRONIC DEVICE, COMPUTER READABLE STORAGE MEDIUM, AND SYSTEM**

(30) Priority: 05.05.2017 CN 201710311981
(71) Applicant: Ping An Technology (Shenzhen) Co., Ltd., Shenzhen, Guangdong 518000 (CN)
(72) Inventor: HE, Bing, Shenzhen Guangdong 518000 (CN)
(74) Representative: Becker Kurig Straus
(86) International application number: PCT/CN2017/105009
(87) International publication number: WO 2018/201669

(57) **Abstract**

The disclosure relates to a network activity indicator presentation method and system. The method includes: monitoring a setting state of a visible attribute of a network activity indicator, wherein the setting state of the visible attribute includes: setting to be a YES state and setting to be a NO state; calculating a count value of the network activity indicator according to the monitored setting state of the visible attribute; and acquiring the count value corresponding to the network activity indicator, and determining a presentation state of the network activity indicator, wherein the presentation state of the network activity indicator includes: a display state and a non-display state. The disclosure has the beneficial effects of simplifying programmed algorithms and saving system resources, the implementation process is brief, execution efficiency is high, and an occupation rate of the system resources is greatly reduced.

## Description

### CLAIM OF PRIORITY

This application claims priority to China Patent Application No. 2017103119815, filed on May 5, 2017 and entitled "Network Activity Indicator Presentation Method and System", which is hereby incorporated by reference in its entirety.

### TECHNICAL FIELD

This disclosure relates to the technical field of Internet, and particularly relates to a network activity indicator presentation method, an electronic device, a computer-readable storage medium and a system.

### BACKGROUND

At present, a network activity indicator of a space in an Apple's operating system is controlled through a network state indication visible attribute in a user interface application program. When its state indication visible attribute is set to be YES, the network activity indicator may appear and, meanwhile, is presented in an animation manner; and when its state indication visible attribute is set to be NO, the network activity indicator may disappear. When the system receives multiple network requests, on the basis of the characteristic that each network request is asynchronously executed, the system is required to pay attention to a callback condition of asynchronous network communication and further judge when all of the asynchronous network requests have ended.

At the present stage, such a technical solution of monitoring the callback condition of asynchronous network communication to judge when to enable and disabe display of the network activity indicator requires a series of complex algorithms, is lengthy in procedure and occupies more system resources.

### SUMMARY

A purpose of the disclosure is to provide a network activity indicator presentation method, an electronic device, a computer-readable storage medium and a system, so as to achieve purposes of simplifying programmed algorithms and saving system resources.

To achieve the purpose, the disclosure provides a network activity indicator presentation method, which includes:
monitoring a setting state of a visible attribute of a network activity indicator, wherein the setting state of the visible attribute includes: setting to be a YES state and setting to be a NO state;
calculating a count value of the network activity indicator according to the monitored setting state of the visible attribute; and
acquiring the count value corresponding to the network activity indicator, and determining a presentation state of the network activity indicator, wherein the presentation state of the network activity indicator includes: a display state and a non-display state.
Preferably, calculating the count value of the network activity indicator according to the monitored setting state of the visible attribute includes:
if it is monitored that the setting state of the visible attribute is the YES state, adding 1 to the count value corresponding to the network activity indicator; and
if it is monitored that the setting state of the visible attribute is the NO state, subtracting 1 from the count value corresponding to the network activity indicator.
Preferably, acquiring the count value corresponding to the network activity indicator and determining the presentation state of the network activity indicator includes:
acquiring the count value corresponding to the network activity indicator, and judging whether the acquired count value is larger than a preset value or not;
if the acquired count value is larger than the preset value, determining that the network activity indicator is in the display state; and
if the acquired count value is smaller than or equal to the preset value, determining that the network activity indicator is in the non-display state.

Preferably, the network activity indicator presentation method is characterized by further including:
setting the count value corresponding to the network activity indicator; or,
setting the count value, and simultaneously setting an initial value corresponding to the count value.

Preferably, acquiring the count value corresponding to the network activity indicator and determining the presentation state of the network activity indicator includes:
acquiring the count value corresponding to the network activity indicator;
comparing the acquired count value with the configured initial value; and
determining whether the network activity indicator is in the display state or the non-display state according to a comparison result.

To achieve the purpose, the disclosure further provides a network activity indicator presentation system, which is characterized by including:
a monitoring module, configured to monitor a setting state of a visible attribute of a network activity indicator, wherein the setting state of the visible attribute includes: setting to be a YES state and setting to be a NO state;
a calculation module, configured to calculate a count value of the network activity indicator according to the monitored setting state of the visible attribute; and
a presentation module, configured to acquire the count value corresponding to the network activity indicator and determine a presentation state of the network activity indicator, wherein the presentation state of the network activity indicator includes: a display state and a non-display state.

Preferably, the counting module is configured to:
if the monitoring module monitors that the setting state of the visible attribute is the YES state, add 1 to the count value corresponding to the network activity indicator; and
if the monitoring module monitors that the setting state of the visible attribute is the NO state, subtract 1 from the count value corresponding to the network activity indicator.

Preferably, the presentation module is configured to:
acquire the count value corresponding to the network activity indicator and judge whether the acquired count value is larger than a preset value or not;
if the acquired count value is larger than the preset value, determine that the network activity indicator is in the display state; and
if the acquired count value is smaller than or equal to the preset value, determine that the network activity indicator is in the non-display state.

Preferably, the network activity indicator presentation system further includes:
a setting module, configured to set the count value corresponding to the network activity indicator; or, set the count value and simultaneously set an initial value corresponding to the count value.

Preferably, the presentation module is configured to:
acquire the count value corresponding to the network activity indicator;
compare the acquired count value with the configured initial value; and
determine whether the network activity indicator is in the display state or the non-display state according to a comparison result.

In addition, the disclosure further provides a computer-readable storage medium, in which a computer program of a network activity indicator presentation system is stored, wherein the computer program may be executed by a processor to implement the following steps:
monitoring a setting state of a visible attribute of a network activity indicator, wherein the setting state of the visible attribute includes: setting to be a YES state and setting to be a NO state;
calculating a count value of the network activity indicator according to the monitored setting state of the visible attribute; and
acquiring the count value corresponding to the network activity indicator, and determining a presentation state of the network activity indicator, wherein the presentation state of the network activity indicator includes: a display state and a non-display state.

Furthermore, the disclosure also provides an electronic device, which includes a memory and a processor, wherein a computer program of a network activity indicator presentation system is stored in the memory, and the computer program may be executed by the processor to implement the following steps:
monitoring a setting state of a visible attribute of a network activity indicator, wherein the setting state of the visible attribute includes: setting to be a YES state and setting to be a NO state;
calculating a count value of the network activity indicator according to the monitored setting state of the visible attribute; and
acquiring the count value corresponding to the network activity indicator, and determining a presentation state of the network activity indicator, wherein the presentation state of the network activity indicator includes: a display state and a non-display state.

The disclosure has the following beneficial effects.

The setting state of the visible attribute of the network activity indicator is monitored; the count value of the network activity indicator is calculated according to the monitored setting state of the visible attribute; and the count value corresponding to the network activity indicator is acquired, and the presentation state of the network activity indicator is determined. The beneficial effects of simplifying programmed algorithms and saving system resources are achieved, the implementation procedure is brief, execution efficiency is high, and an occupation rate of the system resources is greatly reduced.

### BRIEF DESCRIPTION OF THE ACCOMPANYING DRAWINGS

FIG. 1 is a schematic diagram of an operating environment for a preferred embodiment of a network activity indicator presentation system 100 according to the disclosure.
FIG. 2 is a schematic diagram of functional modules of an implementation mode of a network activity indicator presentation system according to the disclosure.
FIG. 3 is a schematic diagram of functional modules of another implementation mode of a network activity indicator presentation system according to the disclosure.
FIG. 4 is a flowchart of an implementation mode of a network activity indicator presentation method according to the disclosure.
FIG. 5 is a flowchart of another implementation mode of a network activity indicator presentation method according to the disclosure.

### DETAILED DESCRIPTION OF ILLUSTRATED EMBODIMENTS

The principle and characteristics of the disclosure will be described below in combination with the accompanying drawings. Listed examples are adopted not to limit the scope of the disclosure but only to explain the disclosure.

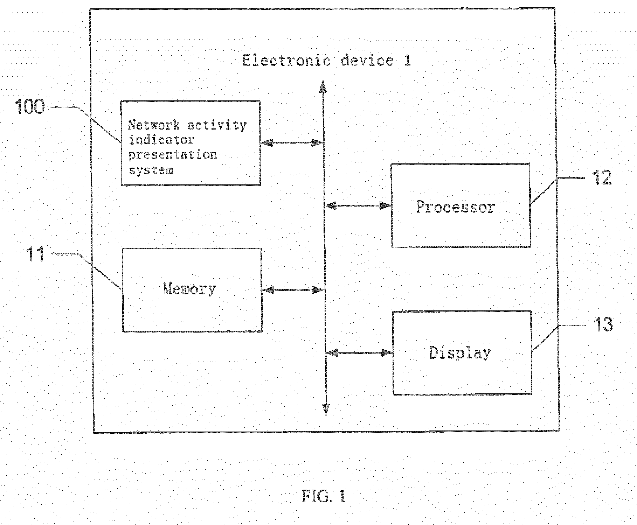

FIG. 1 is a schematic diagram of an operating environment for a preferred embodiment of a network activity indicator presentation system 100 according to the disclosure. In the embodiment shown in FIG. 1, the network activity indicator presentation system 100 is installed and operated in an electronic device 1. The electronic device 1 may be computing equipment such as a desktop computer, a notebook computer, a palmtop computer and a server. The electronic device 1 may include, but not limited to, a memory 11, a processor 12 and a display 13. The electronic device 1 with the components 11-13 is only shown in FIG. 1. However, it should be understood that not all of the shown components are required to be implemented and more or fewer components may be implemented instead.

In some embodiments, the memory 11 may be an internal storage unit of the electronic device 1, for example, a hard disk or memory of the electronic device 1. In some other embodiments, the memory 11 may also be external storage equipment of the electronic device 1, for example, a plug-in type hard disk, Smart Media Card (SMC), Secure Digital (SD) card and flash card configured on the electronic device 1. Furthermore, the memory 11 may not only include the internal storage unit of the electronic device 1 but also include the external storage equipment. The memory 11 is configured to store application software installed in the electronic device 1 and various types of data, for example, a program code of the network activity indicator presentation system 100. The memory 11 may further be configured to temporally store data which has been output or will be output.

The processor 12, in some embodiments, may be a Central Processing Unit (CPU), a microprocessor or another data processing chip, and is configured to operate the program code stored in the memory 11 or process data, for example, executing the network activity indicator presentation system 100.

The display 13, in some embodiments, may be a Light-Emitting Diode (LED) display, a liquid crystal display, a touch liquid crystal display, an Organic LED (OLED) touch display and the like. The display 13 is configured to display information processed in the electronic device 1 and configured to display a visual user interface, for example, a user operating interface. The components 11-13 of the electronic device 1 communicate with one another through a system bus.

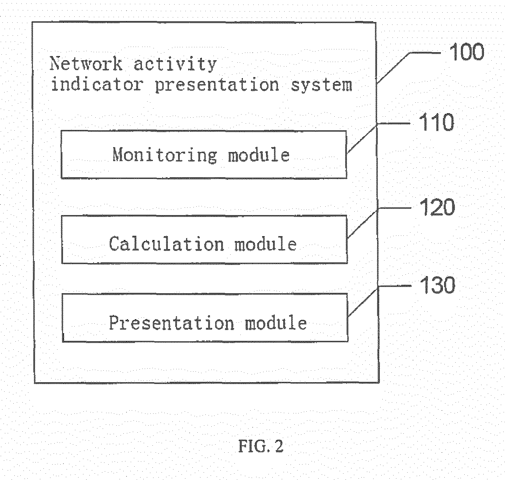

Based on the descriptions about the embodiment of FIG. 1, referring to FIG. 2, FIG. 2 is a schematic diagram of functional modules of an implementation mode of a network activity indicator presentation system according to the disclosure. In the embodiment, the network activity indicator presentation system 100 may be divided into one or more modules, and the one or more modules are stored in a memory 11, and are executed by one or more processors (i.e., a processor 12 in the embodiment) to implement the disclosure.

For example, in FIG. 2, the network activity indicator presentation system 100 may be divided into a monitoring module 110, a calculation module 120 and a presentation module 130. Module mentioned in the disclosure refers to a series of computer program instruction segments capable of realizing specific functions and is more suitable than a program to describe an execution process of the network activity indicator presentation system 100 in an electronic device 1, wherein
the monitoring module 110 is configured to monitor a setting state of a visible attribute of a network activity indicator, wherein the setting state of the visible attribute includes: setting to be a YES state and setting to be a NO state.

In the embodiment of the disclosure, monitoring, executed by the monitoring module 110, over the setting state of the visible attribute of the network activity indicator includes: real-time monitoring and monitoring according to a preset period, and the monitoring module 110 may select according to a specific requirement of a specific application scenario. For example, for an application scenario in which a higher requirement on timeliness is made, the monitoring module 110 may perform real-time monitoring; and for an application scenario in which a higher requirement on system resource occupation rate is made, the monitoring module 110 may determine a specific monitoring period length according to the specific application scenario and further perform monitoring according to the determined period length.

In the embodiment of the disclosure, the setting state of the visible attribute of the network activity indicator may be understood as follows.

During a practical application, the described visible attribute of the network activity indicator may be expressed as: network Activity Indicator Visible. Under a normal circumstance, the network activity indicator presentation system 100 is required to set a value of the visible attribute network Activity Indicator Visible at the beginning of a network request and at the end of the network request. For example, when the network activity indicator presentation system 100 assigns the value of the visible attribute network Activity Indicator Visible to be YES, the network activity indicator presentation system 100 may usually display the network activity indicator, and under such a circumstance, it can be understood that the setting state of the visible attribute of the network activity indicator is the YES state. When the network activity indicator presentation system 100 assigns the value of the visible attribute network Activity Indicator Visible to be NO, the network activity indicator presentation system 100 may usually cancel display of the network activity indicator, and under such a circumstance, it can be understood that the setting state of the visible attribute of the network activity indicator is the NO state.

The calculation module 120 is configured to calculate a count value of the network activity indicator according to the monitored setting state of the visible attribute.

The calculation module 120 adds 1 to or subtracts 1 from the count value corresponding to the network activity indicator according to whether the setting state, monitored by the monitoring module 110, of the visible attribute of the network activity indicator is the YES state or the NO state. In the embodiment of the disclosure, if the setting state, monitored by the monitoring module 110, of the visible attribute of the network activity indicator is the YES state, the calculation module 120 executes operation of adding 1 to the count value corresponding to the network activity indicator; and if the setting state, monitored by the monitoring module 110, of the visible attribute of the network activity indicator is the NO state, the calculation module 120 executes operation of subtracting 1 from the count value corresponding to the network activity indicator.

The presentation module 130 is configured to acquire the count value corresponding to the network activity indicator and determine a presentation state of the network activity indicator, wherein the presentation state of the network activity indicator includes: a display state and a non-display state.

The presentation module 130 may acquire the count value corresponding to the network activity indicator in two manners, i.e., real-time acquisition and periodic acquisition. The presentation module 130 may select according to a specific requirement of a specific application scenario. For example, for an application scenario in which a higher requirement on timeliness is made or close attention is paid to a display condition of the network activity indicator, the presentation module 130 may acquire the count value corresponding to the network activity indicator in real time; and for an application scenario in which a higher requirement on system resource occupation rate is made, the presentation module 130 may determine a specific count value acquisition period length according to the specific application scenario and further acquire the count value corresponding to the network activity indicator according to the determined period length. Therefore, the presentation module 130 determines whether the presentation state of the network activity indicator is the display state or the non-display state according to the acquired count value corresponding to the network activity indicator.

During a practical application, the network activity indicator presentation system 100 may conveniently determine the presentation state of the network activity indicator only by setting the count value corresponding to the network activity indicator (for example, 1 is added to or subtracted from the count value corresponding to the network activity indicator) at the beginning of the network request and at the end of the network request without paying attention to a callback condition of asynchronous network communication and paying attention to a state of the network activity indicator.

In a preferred embodiment of the disclosure, the presentation module 130, when acquiring the count value corresponding to the network activity indicator, compares the acquired count value with a preset value and judges whether the acquired count value is larger than the preset value or not, thereby determining the presentation state corresponding to the network activity indicator according to a comparison result. For example, the network activity indicator presentation system 100 sets a preset value according to a specific application scenario, and at the same time of setting the preset value, sets a judgment standard corresponding to the presentation state of the network activity indicator. For example, the network activity indicator presentation system 100 sets the preset value to be 0 and simultaneously sets the judgment standard corresponding to the presentation state of the network activity indicator to be that: if the count value corresponding to the network activity indicator is larger than the preset value 0, it is determined that the presentation state corresponding to the network activity indicator is the display state, and if the count value corresponding to the network activity indicator is smaller than or equal to the preset value 0, it is determined that the presentation state corresponding to the network activity indicator is the non-display state. A magnitude of the preset value and the judgment standard for the presentation state of the network activity indicator are not limited in the embodiment of the disclosure and may be specifically set by the network activity indicator presentation system 100 according to a specific application scenario of the network activity indicator.

Compared with the prior art, the network activity indicator presentation system of the embodiment of the disclosure has the advantages that the setting state of the visible attribute of the network activity indicator is monitored, the count value of the network activity indicator is calculated according to the monitored setting state of the visible attribute, the count value corresponding to the network activity indicator is acquired, and the presentation state of the network activity indicator is determined, so that the beneficial effects of simplifying programmed algorithms and saving system resources are achieved, the implementation procedure is brief, execution efficiency is high, and an occupation rate of the system resources is greatly reduced.

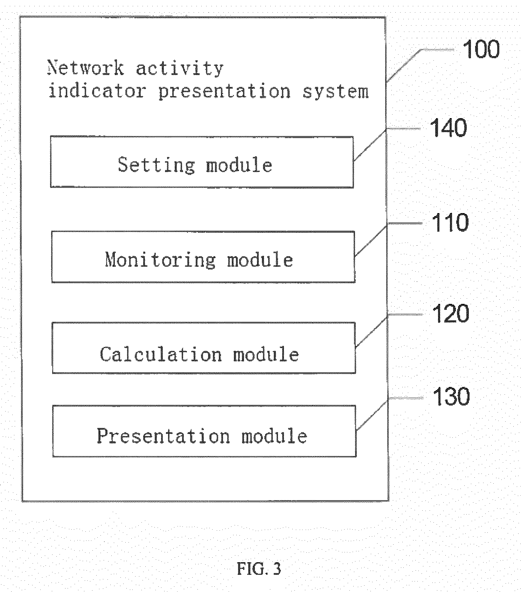

Based on the descriptions about the embodiments of FIG. 1 and FIG. 2, referring to FIG. 3, FIG. 3 is a schematic diagram of functional modules of another implementation mode of a network activity indicator presentation system according to the disclosure. On the basis of the embodiment of FIG. 2, as shown in FIG. 3, the network activity indicator presentation system of the disclosure further includes:

a setting module 140, configured to set the count value corresponding to the network activity indicator; or, set the count value and simultaneously set an initial value corresponding to the count value.

When the network activity indicator presentation system 100 executes an operation event corresponding to the flowchart shown in FIG. 1 for the first time, the setting module 140 sets the count value corresponding to the network activity indicator, and thus the network activity indicator presentation system 100 is only required to directly calculate the count value corresponding to the network activity indicator according to the setting state of the visible attribute of the network activity indicator when subsequently executing the operation event corresponding to the flowchart shown in FIG. 1.

In a preferred embodiment of the disclosure, at the same time of setting the count value corresponding to the network activity indicator, the setting module 140 may also set the initial value corresponding to the count value and take the set initial value of the count value as a comparison standard corresponding to the presentation state of the network activity indicator. For example, the setting module 140 sets the count value corresponding to the network activity indicator and simultaneously sets the initial value of the count value of the network activity indicator. For example, the initial value is set to be 0. When acquiring that the count value corresponding to the network activity indicator is larger than 0, the presentation module 130 determines that the presentation state of the network activity indicator is the display state; and when acquiring that the count value corresponding to the network activity indicator is smaller than or equal to 0, the presentation module 130 determines that the presentation state of the network activity indicator is the non-display state, and for example, directly makes the network activity indicator disappear from a user operating interface.

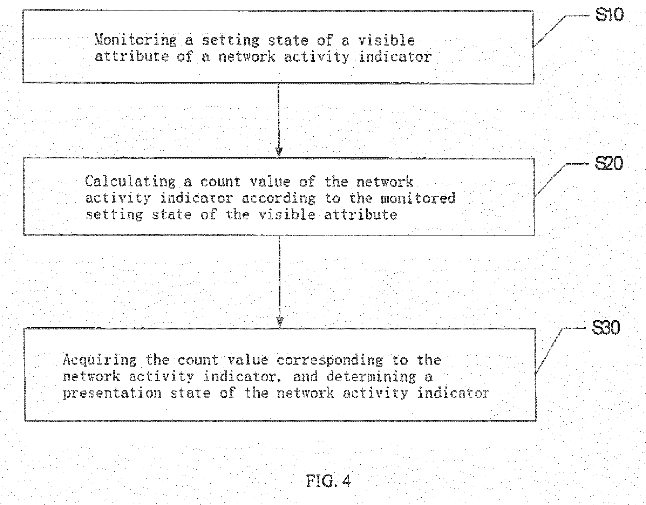

FIG. 4 is a flowchart of an implementation mode of a network activity indicator presentation method according to the disclosure. The network activity indicator presentation method may be implemented by Steps S10-S30 described below.

In Step S10, a setting state of a visible attribute of a network activity indicator is monitored.

In the embodiment of the disclosure, monitoring, executed by a system, over the setting state of the visible attribute of the network activity indicator includes: real-time monitoring and monitoring according to a preset period, and the system may select according to a specific requirement of a specific application scenario. For example, for an application scenario in which a higher requirement on timeliness is made, the system may perform real-time monitoring; and for an application scenario in which a higher requirement on system resource occupation rate is made, the system may determine a specific monitoring period length according to the specific application scenario and further perform monitoring according to the determined period length.

In the embodiment of the disclosure, the setting state of the visible attribute of the network activity indicator may be understood as follows.

During a practical application, the described visible attribute of the network activity indicator may be expressed as: network Activity Indicator Visible. Under a normal circumstance, the system is required to set a value of the visible attribute network Activity Indicator Visible at the beginning of a network request and at the end of the network request. For example, when the system assigns the value of the visible attribute network Activity Indicator Visible to be YES, the system may usually display the network activity indicator, and under such a circumstance, it can be understood that the setting state of the visible attribute of the network activity indicator is a YES state. When the system assigns the value of the visible attribute network Activity Indicator Visible to be NO, the system may usually cancel display of the network activity indicator, and under such a circumstance, it can be understood that the setting state of the visible attribute of the network activity indicator is a NO state.

In Step S20, a count value of the network activity indicator is calculated according to the monitored setting state of the visible attribute.

The system adds 1 to or subtracts 1 from the count value corresponding to the network activity indicator according to whether the monitored setting state of the visible attribute of the network activity indicator is the YES state or the NO state. In the embodiment of the disclosure, if the setting state, monitored by the system, of the visible attribute of the network activity indicator is the YES state, operation of adding 1 to the count value corresponding to the network activity indicator is executed; and if the setting state, monitored by the system, of the visible attribute of the network activity indicator is the NO state, operation of subtracting 1 from the count value corresponding to the network activity indicator is executed.

In Step S30, the count value corresponding to the network activity indicator is acquired, and a presentation state of the network activity indicator is determined.

The system may acquire the count value corresponding to the network activity indicator in two manners, i.e., real-time acquisition and periodic acquisition. The system may select according to a specific requirement of a specific application scenario. For example, for an application scenario in which a higher requirement on timeliness is made or close attention is paid to a display condition of the network activity indicator, the system may acquire the count value corresponding to the network activity indicator in real time; and for an application scenario in which a higher requirement on system resource occupation rate is made, the system may determine a specific count value acquisition period length according to the specific application scenario and further acquire the count value corresponding to the network activity indicator according to the determined period length. Therefore, whether the presentation state of the network activity indicator is the display state or the non-display state is determined according to the acquired count value corresponding to the network activity indicator.

During a practical application, the system may conveniently determine the presentation state of the network activity indicator only by setting the count value corresponding to the network activity indicator (for example, 1 is added to or subtracted from the count value corresponding to the network activity indicator) at the beginning of the network request and at the end of the network request without paying attention to a callback condition of asynchronous network communication and paying attention to a state of the network activity indicator.

In a preferred embodiment of the disclosure, the system, when acquiring the count value corresponding to the network activity indicator, compares the acquired count value with a preset value and judges whether the acquired count value is larger than the preset value or not, thereby determining the presentation state corresponding to the network activity indicator according to a comparison result. For example, the system sets a preset value according to a specific application scenario, and at the same time of setting the preset value, sets a judgment standard corresponding to the presentation state of the network activity indicator. For example, the system sets the preset value to be 0 and simultaneously sets the judgment standard corresponding to the presentation state of the network activity indicator to be that: if the count value corresponding to the network activity indicator is larger than the preset value 0, it is determined that the presentation state corresponding to the network activity indicator is the display state, and if the count value corresponding to the network activity indicator is smaller than or equal to the preset value 0, it is determined that the presentation state corresponding to the network activity indicator is the non-display state. A magnitude of the preset value and the judgment standard for the presentation state of the network activity indicator are not limited in the embodiment of the disclosure and may be specifically set by the system according to a specific application scenario of the network activity indicator.

Compared with the prior art, the network activity indicator presentation method of the embodiment of the disclosure has the advantages that the setting state of the visible attribute of the network activity indicator is monitored, the count value of the network activity indicator is calculated according to the monitored setting state of the visible attribute, the count value corresponding to the network activity indicator is acquired, and the presentation state of the network activity indicator is determined, so that the beneficial effects of simplifying programmed algorithms and saving system resources are achieved, the implementation procedure is brief, execution efficiency is high, and an occupation rate of the system resources is greatly reduced.

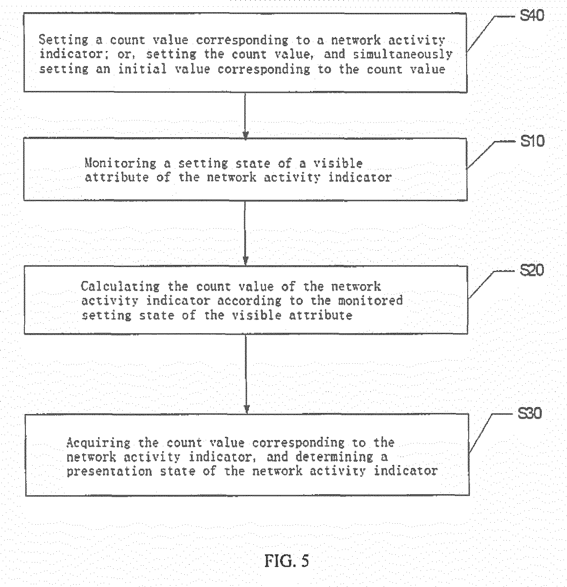

Based on the descriptions about the embodiment of FIG. 4, referring to FIG. 5, FIG. 5 is a flowchart of another implementation mode of a network activity indicator presentation method according to the disclosure. On the basis of the embodiment of FIG. 1, the network activity indicator presentation method of the disclosure further includes the following step.

In Step S40, the count value corresponding to the network activity indicator is set; or, the count value is set, and an initial value corresponding to the count value is simultaneously set.

In the embodiment of the disclosure, the operation that the system sets the count value corresponding to the network activity indicator may be executed before Step S10 in the embodiment of FIG. 1 and may also be executed after Step S10 and before Step S20. In the embodiment of FIG. 5, descriptions will be made with execution of Step S40 before Step S10 as an example.

As shown in FIG. 5, when the system executes an operation event corresponding to the flowchart shown in FIG. 1 for the first time, the system sets the count value corresponding to the network activity indicator, and thus the system is only required to directly calculate the count value corresponding to the network activity indicator according to the setting state of the visible attribute of the network activity indicator when subsequently executing the operation event corresponding to the flowchart shown in FIG. 1.

In a preferred embodiment of the disclosure, at the same time of setting the count value corresponding to the network activity indicator, the system may also set the initial value corresponding to the count value and take the set initial value of the count value as a comparison standard corresponding to the presentation state of the network activity indicator. For example, the system sets the count value corresponding to the network activity indicator and simultaneously sets the initial value of the count value of the network activity indicator. For example, the initial value is set to be 0. When acquiring that the count value corresponding to the network activity indicator is larger than 0, the system determines that the presentation state of the network activity indicator is the display state; and when acquiring that the count value corresponding to the network activity indicator is smaller than or equal to 0, the system determines that the presentation state of the network activity indicator is the non-display state, and for example, directly makes the network activity indicator disappear from a user operating interface.

Compared with the prior art, the network activity indicator presentation method in the embodiment of the disclosure has the advantages that the count value corresponding to the network activity indicator is set, so that the procedure is simplified, and convenience for execution of the system is improved.

Compared with the prior art, the network activity indicator presentation system in the embodiment of the disclosure has the advantages that the count value corresponding to the network activity indicator is set, so that the procedure is simplified, and convenience for execution of the system is improved.

The above are only the preferred embodiments of the disclosure and not intended to limit the disclosure. Any modifications, equivalent replacements, improvements and the like made within the spirit and principle of the disclosure shall all fall within the scope of protection of the disclosure.

## Claims

1. A network activity indicator presentation method, comprising:
monitoring a setting state of a visible attribute of a network activity indicator, wherein the setting state of the visible attribute comprises: setting to be a YES state and setting to be a NO state;
calculating a count value of the network activity indicator according to the monitored setting state of the visible attribute; and
acquiring the count value corresponding to the network activity indicator, and determining a presentation state of the network activity indicator, wherein the presentation state of the network activity indicator comprises: a display state and a non-display state.

2. The network activity indicator presentation method of claim 1, wherein calculating the count value of the network activity indicator according to the monitored setting state of the visible attribute comprises:
if it is monitored that the setting state of the visible attribute is the YES state, adding 1 to the count value corresponding to the network activity indicator; and
if it is monitored that the setting state of the visible attribute is the NO state, subtracting 1 from the count value corresponding to the network activity indicator.

3. The network activity indicator presentation method of claim 1, wherein acquiring the count value corresponding to the network activity indicator and determining the presentation state of the network activity indicator comprises:
acquiring the count value corresponding to the network activity indicator, and judging whether the acquired count value is larger than a preset value or not;
if the acquired count value is larger than the preset value, determining that the network activity indicator is in the display state; and
if the acquired count value is smaller than or equal to the preset value, determining that the network activity indicator is in the non-display state.

4. The network activity indicator presentation method of claim 1 or 2 or 3, further comprising:
setting the count value corresponding to the network activity indicator; or,
setting the count value, and simultaneously setting an initial value corresponding to the count value.

5. The network activity indicator presentation method of claim 4, wherein acquiring the count value corresponding to the network activity indicator and determining the presentation state of the network activity indicator comprises:
acquiring the count value corresponding to the network activity indicator;
comparing the acquired count value with the configured initial value; and
determining whether the network activity indicator is in the display state or the non-display state according to a comparison result.

6. A network activity indicator presentation system, comprising:
a monitoring module, configured to monitor a setting state of a visible attribute of a network activity indicator, wherein the setting state of the visible attribute comprises: setting to be a YES state and setting to be a NO state;
a calculation module, configured to calculate a count value of the network activity indicator according to the monitored setting state of the visible attribute; and
a presentation module, configured to acquire the count value corresponding to the network activity indicator and determine a presentation state of the network activity indicator, wherein the presentation state of the network activity indicator comprises: a display state and a non-display state.

7. The network activity indicator presentation system of claim 6, wherein the counting module is configured to:
if the monitoring module monitors that the setting state of the visible attribute is the YES state, add 1 to the count value corresponding to the network activity indicator; and
if the monitoring module monitors that the setting state of the visible attribute is the NO state, subtract 1 from the count value corresponding to the network activity indicator.

8. The network activity indicator presentation system of claim 6, wherein the presentation module is configured to:
acquire the count value corresponding to the network activity indicator and judge whether the acquired count value is larger than a preset value or not;
if the acquired count value is larger than the preset value, determine that the network activity indicator is in the display state; and
if the acquired count value is smaller than or equal to the preset value, determine that the network activity indicator is in the non-display state.

9. The network activity indicator presentation system of claim 6 or 7 or 8, further comprising:
a setting module, configured to set the count value corresponding to the network activity indicator; or, set the count value and simultaneously set an initial value corresponding to the count value.

10. The network activity indicator presentation system of claim 9, wherein the presentation module is configured to:
acquire the count value corresponding to the network activity indicator;
compare the acquired count value with the configured initial value; and
determine whether the network activity indicator is in the display state or the non-display state according to a comparison result.

11. An electronic device, comprising a memory and a processor, wherein a computer program of a network activity indicator presentation system is stored in the memory, and the computer program may be executed by the processor to implement the following steps:
monitoring a setting state of a visible attribute of a network activity indicator, wherein the setting state of the visible attribute comprises: setting to be a YES state and setting to be a NO state;
calculating a count value of the network activity indicator according to the monitored setting state of the visible attribute; and
acquiring the count value corresponding to the network activity indicator, and determining a presentation state of the network activity indicator, wherein the presentation state of the network activity indicator comprises: a display state and a non-display state.

12. The electronic device of claim 11, wherein calculating the count value of the network activity indicator according to the monitored setting state of the visible attribute comprises:
if it is monitored that the setting state of the visible attribute is the YES state, adding 1 to the count value corresponding to the network activity indicator; and
if it is monitored that the setting state of the visible attribute is the NO state, subtracting 1 from the count value corresponding to the network activity indicator.

13. The electronic device of claim 11, wherein acquiring the count value corresponding to the network activity indicator and determining the presentation state of the network activity indicator comprises:
acquiring the count value corresponding to the network activity indicator, and judging whether the acquired count value is larger than a preset value or not;
if the acquired count value is larger than the preset value, determining that the network activity indicator is in the display state; and
if the acquired count value is smaller than or equal to the preset value, determining that the network activity indicator is in the non-display state.

14. The electronic device of claim 11 or 12 or 13, wherein, when the computer program is executed by the processor, the following steps are further implemented:
setting the count value corresponding to the network activity indicator; or,
setting the count value, and simultaneously setting an initial value corresponding to the count value.

15. The electronic device of claim 14, wherein acquiring the count value corresponding to the network activity indicator and determining the presentation state of the network activity indicator comprises:
acquiring the count value corresponding to the network activity indicator;
comparing the acquired count value with the configured initial value; and
determining whether the network activity indicator is in the display state or the non-display state according to a comparison result.

16. A computer-readable storage medium, in which a computer program of a network activity indicator presentation system is stored, wherein the computer program may be executed by a processor to implement the following steps:
monitoring a setting state of a visible attribute of a network activity indicator, wherein the setting state of the visible attribute comprises: setting to be a YES state and setting to be a NO state;
calculating a count value of the network activity indicator according to the monitored setting state of the visible attribute; and
acquiring the count value corresponding to the network activity indicator, and determining a presentation state of the network activity indicator, wherein the presentation state of the network activity indicator comprises: a display state and a non-display state.

17. The computer-readable storage medium of claim 16, wherein calculating the count value of the network activity indicator according to the monitored setting state of the visible attribute comprises:
if it is monitored that the setting state of the visible attribute is the YES state, adding 1 to the count value corresponding to the network activity indicator; and
if it is monitored that the setting state of the visible attribute is the NO state, subtracting 1 from the count value corresponding to the network activity indicator.

18. The electronic device of claim 16, wherein acquiring the count value corresponding to the network activity indicator and determining the presentation state of the network activity indicator comprises:
acquiring the count value corresponding to the network activity indicator, and judging whether the acquired count value is larger than a preset value or not;
if the acquired count value is larger than the preset value, determining that the network activity indicator is in the display state; and
if the acquired count value is smaller than or equal to the preset value, determining that the network activity indicator is in the non-display state.

19. The computer-readable storage medium of claim 16 or 17 or 18, wherein, when the computer program is executed by the processor, the following steps are further implemented:
setting the count value corresponding to the network activity indicator; or,
setting the count value, and simultaneously setting an initial value corresponding to the count value.

20. The computer-readable storage medium of claim 19, wherein acquiring the count value corresponding to the network activity indicator and determining the presentation state of the network activity indicator comprises:
acquiring the count value corresponding to the network activity indicator;
comparing the acquired count value with the configured initial value; and
determining whether the network activity indicator is in the display state or the non-display state according to a comparison result.
